# EUROPEAN PATENT APPLICATION

(11) **EP 2 096 151 A1**
(43) Date of publication of application: **02.09.2009**
(21) Application number: 08102062.0
(22) Date of filing: 27.02.2008
(51) Int. Cl.: C09D 191/06, C09D 15/00

(54) **Composition**

(71) Applicant: Degussa Novara Technology S.p.A., 20016 Pero (MI) (IT)
(72) Inventor: Fregonese, Daniele Dr., Tembelle di Vigonove, 30030 Vigonovo (VE) (IT); Costa, Fulvio, 27048 Sommo (IT)
(74) Representative: Hirsch, Hans-Ludwig

(57) **Abstract**

Composition, containing
• at least one silicon alkoxide,
• at least one wax, wax-like substance, fat, fatty acid or fat-like substance
• at least one hydrophobic
• solvent

can be used to enhance the water resistance of wood.

## Description

The invention refers to a composition and a method to enhance the water resistance of wood.

Coatings constitute one of the most important application of the sol-gel process. This is because of the possibility of using liquid solutions to manufacture solid films with an extremely wide range of chemical compositions on a variety of substrates at relatively low temperatures.

The functionality of sol-gel derived coatings is numerous and can range from electrical conductivity, superconductivity, ferroelectric behaviour, corrosion resistance, abrasion resistance and selective barrier for gas permeation, etc. Regardless of any particular intended application of the coating, its biodegradability is always important along with the performance.

Subject matter of the present invention are sol-gel derived solutions with good biodegradability when applied on a substrate and cured.

These systems which contain natural waxes and silanes are easily manufactured whereas many of the procedure proposed in the literature are very much time consuming, for instance in the patent DE 198 16 136 is described the removal under vacuum of solvent in order to facilitate the reaction among the components. The solutions obtained are particularly suitable for coating of woody items and/or other disposable goods.

It is interesting to mention that there is not very much in the scientific literature on the topic biodegradable coatings via sol-gel techniques among the few is worth to mention the work of Sequira and Evtuguin (Mater. Sci. Eng. C, 27, 1 2007, 172-179) which reported Cellulose/silica hybrids (CSHs) synthesized by a sol-gel method using eucalyptus bleached kraft pulp as cellulose source and tetraethyl orthosilicate (TEOS) as the silica precursor in the presence of heteropoly acids (HPAs) as catalysts, these systems are claimable biodegradable.

In a certain extend also Hedges et al., U.S. Pat. No. 3,917,814, have reported a certain methodology to prepare environment compatible coatings but the process described is far from be implemented for solid items at industrial level as described here.

The subject of the invention is a composition, which is **characterized in that** it contains the following compounds:
- at least one silicon alkoxide
- at least one wax, wax-like substance, fat, fatty acid or fat-like substance or mixtures of these substances
- at least one hydrophobic compound
- solvent
- optionally the composition can contain water and inorganic acid

In the composition the silane can be partially hydrolyzed.

Furtheron the wax, wax-like substance, fat, fatty acid or fat-like substance or mixture of these substances can have been transferred into an emulsion.

The silicon alkoxide can be at least one substance of the group tetramethylorthosilane, tetraethylorthosilane, tetraethoxyorthosilicate, tetrapropylorthosilicates, tetrabutylorthosilicate, ethyltriethoxysilane, methyltrimethoxysilane, methyltriethoxysilane, or a mixture of the same.

The compound to be taken from the wax, wax-like substance, fat, fatty acid or fat-like substance can be one of the following compounds:
candelilla wax, carnauba wax, Japan wax, espartograss wax, cork wax, guaruma wax, rice oil wax, sugar cane wax, ouricury wax, montan wax, beeswax, shellac wax, spermaceti, lanolin (wool wax), uropygial fat, ceresine, ozocerite (earth wax), stearic acid other suitable additives are fat-like substances, such as lecithins and phospholipids.

Sphingosines and sphingolipids are also suitable like fatty acids, such as stearic acid, hydroxystearic acid or behenic acid, ring opening products of olefin epoxides containing 12 to 22 carbon atoms with fatty alcohols containing 12 to 22 carbon atoms and/or polyols containing 2 to 15 carbon atoms and 2 to 10 hydroxyl groups and mixtures thereof.

This compound can be 0.5 to 98 % of weight of the composition.

The hydrophobic agent can be silicon-based agents including siloxane, silane or silicon; F-based hydrophobic agents such as fluorosilanes, fluoroalkylsilanes (FAS), polytetrafluoroethylene, polytrifluoroethylene, polyvinylfluoride, or functional fluoroalkyl compounds. The content of hydrophobic agent can between 0.05 and 5 % per weight.

A further subject of the invention is a method to manufacture sol-gel based solution that can be used to prepare coating systems with excellent biocompatibility and biodegradability. Additionally the devised solutions seems to prevent the fungi and mould growth.

The method to produce the composition according to the invention is **characterized in that** under stirring the hydrophobic compound is distributed in a solvent, then water and inorganic acid are added and stirred for some time further the silicon alkoxide is added after further stirring the wax, wax-like substance, fat, fatty acid or fat-like substance or mixtures of these substances are added.

The process according to the invention concerns the preparation of a sol in solution of one or more alkoxides having the formula:

Xₘ-Me-(OR)ₙ₋ₘ

where M is a metal belonging to 3, 4 or 5 groups, n is the metal valence X is R₁ or OR₁ where R₁ is equal or different from R, and m is an integer number equal of inferior to 3, R and R1 are hydrocarbon moieties with atom carbon chain length up to 12.

The inventors have found that the alkoxide is miscible in solvent such as tetrahydrofurane, acetone and ethanol. In accordance with the invention, a hydrophobic agent and functional additive can be employed to chemically modify the surfaces.

Hydrophobic agents conventionally used in the art may be silicon-based agents including siloxane, silane or silicon; F-based hydrophobic agents such as fluorosilanes, fluoroalkylsilanes (FAS), polytetrafluoroethylene, polytrifluoroethylene, polyvinylfluoride, or functional fluoroalkyl compounds, preferred hydrophobic agent is tetrafluoroctyltriethoxysilane supplied by Degussa GmbH under the trade name Dynasil F8261.

Afterwards the hydrolysis can be initiated by adding water solution of an acid. The hydrolysis reaction is exothermic and for this reason the temperature raises some degrees. The increase is very much dependent on the batch size and hydrolysis conditions. As the maximal temperature is reached a wax can be added.

In accordance with the invention, suitable waxes can be inter alia natural waxes such as, for example, candelilla wax, carnauba wax, Japan wax, espartograss wax, cork wax, guaruma wax, rice oil wax, sugar cane wax, ouricury wax, montan wax, beeswax, shellac wax, spermaceti, lanolin (wool wax), uropygial fat, ceresine, ozocerite (earth wax), stearic acid other suitable additives are fat-like substances, such as lecithins and phospholipids.

Lecithins are known among experts as glycerophospholipids which are formed from fatty acids, glycerol, phosphoric acid and choline by esterification. Accordingly, lecithins are also frequently referred to by experts as phosphatidyl cholines (PCs) and correspond to compounds caracterized by the presence of linear aliphatic hydrocarbon moieties containing 15 to 17 carbon atoms and up to 4 cis-double bonds.

Examples of natural lecithins are the kephalins which are also known as phosphatidic acids and which are derivatives of 1,2-diacyl-sn-glycerol-3-phosphoric acids.

By contrast, phospholipids are generally understood to be mono- and preferably diesters of phosphoric acid with glycerol (glycerophosphates) which are normally classed as fats.

Sphingosines and sphingolipids are also suitable like fatty acids, such as stearic acid, hydroxystearic acid or behenic acid, ring opening products of olefin epoxides containing 12 to 22 carbon atoms with fatty alcohols containing 12 to 22 carbon atoms and/or polyols containing 2 to 15 carbon atoms and 2 to 10 hydroxyl groups and mixtures thereof.

The mixture so obtained can be then applied on a substrate by well known method of application, like: dip coating, spin coating, spray coating, laminar flow, impressing coating, rolling coating. Drying and hardening of the sol-gel system according to the invention can be carried out in a temperature that range 15 to 200C for a time period which may be as short as one second or may last for several hours. It is preferred to execute the drying in a forced-air oven or by means of suitable electromagnetic radiation, such as, e.g. IR radiation, electron radiation or microwave radiation.

There are no particular limitations as far as the substrates to be coated with the sol-gel system of this invention are concerned.

A further subject of the invention is a method to enhance the water resistance of wood, which is **characterized in that** the wood is treated with the composition according to this invention.

### Example 1

A 500 ml round flask containing a magnetic stir bar is loaded with 156.6 g of Tetrahydrofuran (THF) and 0,81 g of polyfluorinesilane supplied by Degussa GmbH under the trade name F8261. At room temperature and under stirring are then added very slowly 0.1 g of HCl 37% and 1.6 g of water. The temperature increases due to the hydrolysis reaction is of 20°C.

The solution obtained is stirred for 5 hours. Then the solution is loaded with 8.3 g of tetraethoxysilane supplied by Degussa GmbH under the trade name Dynasil (TEOS) and stirred for 1 hour. At last 83.6 g of beeswax are added to the solution, that was previously molden at 55 °C. The mixture obtained is then applied at 40°C temperature via dip coating technique on woody plate (10 cm length, 10 cm width, 10 cm height). The plate is then dried at room temperature for 24 hours.

The dried coating material so obtained has undergone characterisation tests:

Water repellency test has been performed by dipping the article in water (pH 4) for 5 hours and then checking the level of water uptake by comparing the weight of the object before and after the test.

The results showed that there was no water uptake.

A samples of the coating material has been taken and analysed by gaschromatography technique and IR spectroscopy in order to check the content of no environment compatible components (THF and F8261), the percentage composition was: TEOS (SiO₂) 2.7 %, beeswax 96.0 %, Dynasilan F8261 0.9 % which lead to a environment-compatible coating.

### Example 2

A 500 ml round flask containing a magnetic stir bar is loaded with 156.6 g of Tetrahydrofuran (THF) and 0,8 g of polyfluorinesilane supplied by Degussa GmbH under the trade name F8261. At room temperature and under stirring are then added very slowly 0.1 g of HCl 37% and 1.6 g of water. The temperature increases due to the hydrolysis reaction is of 20°C. The solution obtained is stirred for 5 hours. Then the solution is loaded with 8.3 g of tetraethoxysilane supplied by Degussa GmbH under the trade name Dynasil (TEOS) and stirred for 1 hour.

At last 85.45 g of stearic acid are added to the solution, which was previously molden at 55 °C. The mixture obtained is then applied at 40°C temperature via dip coating technique on woody plate (10 cm length, 10 cm width, 10 cm height). The plate is then dried at room temperature for 24 hours.

The dried coating material so obtained has undergone characterisation tests:

Water repellency test has been performed by dipping the article in water (pH 4) for 5 hours ad then checking the level of water uptake by comparing the weight of the object before and after the test.

The results showed that there was no water uptake.

A samples of the coating material has been taken and analysed by gaschromatography technique and IR spectroscopy in order to check the content of no environment compatible components (THF and F8261), the percentage composition was: TEOS (SiO₂) 2.7 %, stearic acid 95.4 %, Dynasilan F8261 0.9 % which lead to a environment-compatible coating.

### Example 3

A 500 ml round flask containing a magnetic stir bar is loaded with 156.6 g of Tetrahydrofuran (THF) and 0,8 g of polyfluorinesilane supplied by Degussa GmbH under the trade name F8261. At room temperature and under stirring are then added very slowly 0.1638g of HCl 37% and 1.6375g of water. The temperature increases due to the hydrolysis reaction is of 20°C. The solution so obtained is stirred for 5 hours. Then the solution is loaded with 8.3 g of tetraethoxysilane supplied by Degussa GmbH under the trade name Dynasil (TEOS) and stirred for 1 hour. At last 85.4 g of carnauba wax are added to the solution, which was previously molden at 64°C. The mixture so obtained is then applied at 40°C temperature via dip coating technique on woody plate (10 cm length, 10 cm width, 10 cm height). The plate is then dried at room temperature for 24 hours.

The dried coating material so obtained has undergone characterisation tests:

Water repellency test has been performed by dipping the article in water (pH 4) for 5 hours ad then checking the level of water uptake by comparing the weight of the object before and after the test.

The results showed that there was no water uptake.

A samples of the coating material has been taken and analysed by gaschromatography technique and IR spectroscopy in order to check the content of no environment compatible components (THF and F8261), the percentage composition was: TEOS (SiO₂) 2.7 %, carnauba wax 96.0 %, Dynasilan F8261 0.9 % which lead to a environment-compatible coating.

## Claims

1. Composition, **characterized in that** it contains the following compounds
- at least one silicon alkoxide
- at least one wax, wax-like substance, fat, fatty acid or fat-like substance or mixture of these substances
- at least one hydrophobic compound
- solvent.

2. Composition, according to claim 1, **characterized in that** the silicon alkoxide is at least partially hydrolyzed.

3. Composition, according to claim 1, **characterized in that** the wax, wax-like substance, fat, fatty acid or fat-like substance or mixtures of these substances are transferred into an emulsion.

4. Method to enhance the water resistance of wood, **characterized in that** the wood is treated with composition according to claim 1.
